# EUROPEAN PATENT APPLICATION

(11) **EP 2 119 756 A1**
(43) Date of publication of application: **18.11.2009**
(21) Application number: 07702544.3
(22) Date of filing: 06.02.2007
(51) Int. Cl.: C10G 47/34, C07C 211/27, C09K 3/32

(54) **PROCESS FOR CHANGING THE VISCOSITY OF PETROLEUM**

(71) Applicant: Acosta Estrada, Marcelo, Quito (EC)
(72) Inventor: Acosta Estrada, Marcelo, Quito (EC)
(74) Representative: Carpintero Lopez, Francisco
(86) International application number: PCT/EC2007/000001
(87) International publication number: WO 2008/095507

(57) **Abstract**

The purpose of the invention described in this document is to disclose a novel method using mixtures to change the viscosity of both light and heavy petroleums, by decreasing or increasing said viscosity. The methods derived from this invention are useful at ambient temperature and atmospheric pressure. The active component of the invention is dopamine, a compound that combined with other substances enables a change in the fluidity properties of petroleum, an increase in the electric charge properties of the mixtures and solutions and the dissolution of insoluble compounds in water or aqueous solutions. Some of the mixtures of this invention have been applied to modifying proton mobility, whereby significant increases in particular caused by the presence of metals chosen to bring about this purpose, can be detected within these mixtures, by measuring the electric charge. The experiments which led to this invention demonstrated that the juice obtained from any part of the banana plant, whereof the chemical analysis includes dopamine and other compounds such as quinonas, carotenes and terpenes, is the cause of the effects found, in particular effects on the electric properties and on dissolving metals and metal compounds.

## Description

### FIELD OF THE INVENTION

1. This invention is related to mixtures made of dopamine and juice obtained from squeezing any part of the banana plant. The invention has been intended, and has been developed, to achieve many purposes such as alteration of the viscosity of crude oil through modification of its physical and chemical properties, and also the generation of energy, and the dissolution of metal and their compounds.

2. The juice obtained from squeezing any part of the banana plant, containing dopamine, behaves like a super acid. This behaviour which was determined during the course of the experimental work is the main feature of this invention, because it is the basis that permits hydrogenation, or chemical reduction of substrates through the action of active metals, or their hydrides, and the oxidation of organic compound through mechanisms which are not completely explained, and are being studied.

### BACKGROUND FOR THE INVENTION

3. A great percentage of the crude oil world reserves is made up of heavy oil, and is spread out over the whole planet, in surface sites, in the form of bituminous sands, and also in deep sites.

4. The classification of a crude oil as "heavy" or "light" is given by the measure value of its density, and by the insertion of this value into a parameter which is known as API degree.

5. This parameter permits to categorize oils between 5 and 16 API degrees as heavy and viscous; and crude oils between 30 and 50 API degrees as "light" oils.

6. The expression "improving a crude oil" must be understood as referring to the processes which obtains light oil from heavy oil stock. The term "improving the oil" is cited in U.S. Patent 6852215 as a process to convert high API oil into lower API oil, without changing any of the other characteristics, or their ranges.

7. Ecuadorian crude oils are low API oils, located below 0 degrees of latitude, such as the oil found at Pungarayacu site (5° API), or light, high API oils of about 42° API, at the northern part of the country.

8. Several techniques to improve the oil such as emulsification, and heating the crude oil with steam at diverse temperatures and pressures that are used in the oil industry are described in the cited U.S. patent. Restrictions to the different processes such as processing cost, and degradation of the crude, as well as difficulties to separate the crude from the compounds used for the treatment before fractionation are discussed in the cited patent.

9. The effect of low and high temperature is of paramount importance in the improvement process because temperature enhances undesired reactions such as, for example, cracking and cocking. Additionally, high temperatures provoke the decomposition of certain valuable components. For this cause, it becomes necessary to quench any undesired reactions, to preserve the original composition of the improved oil. On account of these harmful effects, it is desirable to carry out the improvement process at as low temperatures as possible, or at ambient temperature, as is it proposed in this patent to control selectivity and the yield of the reactions that occur.

10.In the context of crude oil recovery, Patent US N° 47722395 encompasses a technique for the oxidation of crude oil at high and at low temperatures, in the overall range of 250 y 600 °F. The aforementioned patent an explanation is given about the low mobility at low temperatures, due to an increase in viscosity. On the other hand, in the invention presented in this paper the crude oil is oxidized at ambient temperature.

11.Patent US N° 5021607 deals about the oxidation of saturated hydrocarbons through mixtures containing titanium oxide, silica oxide, an alkaline oxide, an organic nitrogen- and water -containing base, whereby the preferred oxidizing agent is hydrogen peroxide, albeit at temperatures much higher than ambient. In the invention reported in this paper, the oxidizing mixture, the catalyst, and de developed process allow operation at ambient temperature and pressure.

12.When dissolving paraffinic and naphthenic crude oils using linear or aromatic solvent, the efficiency of the process is given by the characteristics of the crude oils. On the other hand, when the crude oil being dissolved is rich in aromatic chemical species the use of the solvents that apply is restricted, due to their carcinogenicity, high volatility, and low ignition points. On the other hand, the invention reported in this paper a biodegradable fluid which does not create any of the problems mentioned above, is used as solvent.

13. Patent US N° 5547563 proposes a method to improve crude oil by means of sonic vibrations, a terpene (limonene), a fatty acid, and pine oil at low pressure and temperature. The patent says that when the above-mentioned technique is applied, a sudden increase in the light fractions can be observed upon distillation, due to unknown causes which can, nevertheless, be attributed to an attack on the molecular bonds that bind long aliphatic chains. This attack is claimed to produce, also, the separation of aliphatic compounds from the cyclic and aromatic ring, thus producing -in both cases- short chains.

14.In the invention hereby reported one of the components of distillation is also organic.

15.The transformation undergone by the hydrocarbons upon being processed to achieve hydrogenation and oxidation has been discussed in the bibliography as due to acid catalysis.

16.In this context, US Patent 6359179 indicates that paraffin carbonilation in the presence of solid catalysts with formation of intermediate carbocationic compounds, is due to the action of the so-called 'superacids'; and that reactions proceed when oxygenated saturated hydrocarbons are thus treated. In this case, US Patent 6359179 claims that solids can easily be separated from reacting mixtures, and can be reutilized to an extent for predetermined periods of time; and that when liquids catalysts are used no such thing is possible.

17.In the invention hereby presented fluid mixtures do not need to be separated, and in case it should be necessary to eliminate them, this can be accomplished through the use of small amounts of energy.

### DETAILED DESCRIPTION OF THE INVENTION

18.The chemical formula for dopamine is the following.

(C₆H₃(OH)₂-CH₂-CH₂-NH₂)

19.And its chemical name is 4-(2 aminoethyl) bencene-1,2 - diol. Dopamine is a member of the catecolamines family, which is represented generically in the following manner.

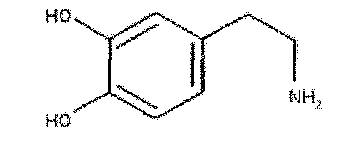

20.Several research centers have reported dopamine contents of between 80 and 560 mg en the skin of bananas. It is also known that dopamine plays an important role in oxidation reactions; and that in some instances it can act as an oxidant, and in other instances it can act as an antioxidant. It is also known that this behavior hinges upon the presence of certain cyclic carbon compounds; certain ions; or certain polar compounds.

21.The juice of parts of banana plants of the *Musaceae* family is a fluid of complex composition mainly made up of water, phosphates, potassium, quinines, lignine, and gums, ad dopamine. Depending on the technology employed for obtaining the juice, the fluid can be obtained from the stem of the plant, or from the pseudo-stem, in the form of an aqueous liquid of around 50% of the original weight of the plant, the above percentage hinging on the particular part of the plant that has been processed. This liquid contains K, N, Mn, Ca, Mg, Zn y Cu in different proportions.

22.Once all cellulose residues have been separated the color of the liquid depends on the variety of the banana plant. Once filtered, the liquid is initially homogenous, although, upon storing for around fifteen days, it turns to a light-brow-colored cereous limpid liquid, containing essentially water, gums, and salts.

23. When two cubic centimeters of an aqueous solution of 40 g/l of dopamine chlorhydrate is put in contact with 500 cubic centimeters of Ecuadorian crude oil of 16° API, in the presence of bivalent ions such as magnesium and calcium, at pH between 4 and 4.5, an significant enhancement of ease of flow of the crude oil is observed, attributable to oxidative effects, not yet fully explained.

24.Regarding the explanation of the oxidative effects, it is known that oxidation-reduction reactions of organic chemical species, in general involve free-radical formation and electron transfer, in the presence of metallic ions. Additionally, direct reduction of carbocations has been observed to occur in the presence of vanadium chloride (II). The inventor proposes that during auto-oxidation, the first step entails the formation of hydroperoxydes that continue to react as long as unsaturated molecules are present in the substrate; and that some alkenes will undergo auto-oxidation when RO₂ radicals are added to the double bond.

25.When the juice obtained from squeezing any part of the banana plant comes in contact with carbon-containing compounds such as crude oil, the compounds are oxidized while in the liquid phase, at ambient temperature and pressure (conditions prevailing in the city of Quito: 545 mm Hg, and 17°C).This oxidation is achieved if metals like vanadium, titanium, and nickel are present in the mixture, which have to have been previously obtained through methods involving the use of juice obtained from squeezing any part of the banana plant. The oxidation effect is enhanced if hydrogen peroxide is used.

26. The same effect obtained with juice obtained from squeezing any part of the banana plant is obtained when dopamine chlorhidrate is used with hydrogen peroxide

27.The protonation that occurs when juice obtained from squeezing any part of the banana plant comes in contact with Ecuadorian crude oil could be partially explained through the existence of quinones in the juice obtained from squeezing any part of the banana plant. Kursanov et. a/. (1985) provide an explanation of these facts, which is feasible if the fact that quinones produce dehydrogenation of organic compounds in the presence of phosphoric acid with formation of stable carbenium ion.

AH₂ + E → [AH]⁺ +[EH]

[AH]⁺ → A + H

28.In the equations above, E is an electrophilic agent, and A id the product of dehydrogenation, and [AH]⁺ is an ion that can be very stable.

29.In the case of crude oil, the reversible reaction is driven forward by the vanadium and the nickel originally present in the crude. Additional to this effect, the hydride donation is improved, albeit not significantly, if zinc o tin should be present in the crude. In this respect it is possible that this behavior may be explained through the hypothesis of a catalytic hydrogenation (Kursanov *et. al*.(1985)), that should occur in the following four stages:
1. Protonation of the substrate (olefin) to form carbenium ion, as is shown below: 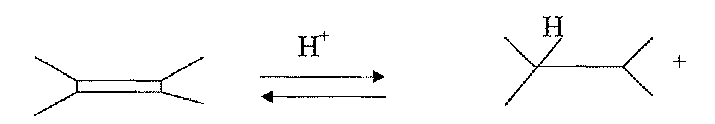
2. Activation of the hydrogen to form the hydrogenated form of the carrier, as is shown below:

   Cat + H₂ → Cat.H
3. Hydride ion transfer from the reduced for of the catalyst to the carbenium ion, as is shown below: 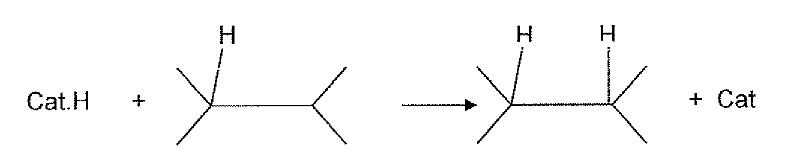
4. Catalyst regeneration

30.Additional to being sources of energy, hydrocarbons are the raw materials for the manufacture of chemicals, and a vast amount of knowledge has been developed for this purpose. This knowledge has allowed for many applications, the vast majority of which are based on the acidification of reactive mixtures, or in the contact with acidic active centers.

31.As the use of hydrofluoric or sulfuric acid has been discouraged on the grounds of environmental considerations, the use of solid catalysts has been encouraged, especially crystalline aluminosilicates (zeolites).

32. Some experiments within the development of this invention were geared to verify the oxidative power of the juice obtained from squeezing any part of the banana plant with this perspective in mind, laboratory tests to verify the oxidative potential of the juice obtained from squeezing any part of the banana plant were carried out.

33.One such experiment entailed placing 100 cubic centimeters of a mixture of juice obtained from squeezing any part of the banana plant and 5 mg of ferric chloride in a 250 cc hermetic bottle. One minute afterwards, the sound of air going into the bottle was considered evidence that vacuum had formed within the bottle. When vacuum was measured a value lower than been expected had the oxygen alone been consumed was confirmed. This indicated the consumption of an additional chemical gaseous species during the reaction.

34.Similar experiments, carried out with additional compounds of vanadium, nickel, copper, and platinum rendered similar results.

35.When submerging metallic alloys of silver and copper; and gold and copper in solutions of hydrogen peroxide and juice obtained from squeezing any part of the banana plant, at ambient temperature and pressure. The dissolution of the alloys and the presence of protons could be verified in both cases, through measuring the direct electrical current used to carry out the electrochemical reaction.

36.In both cases the measured current values increased when one of these two alloys was used as one of the electrodes in the cell, while the other electrode was made out of zinc or graphite.

37.The slow oxidation of organic and inorganic compounds in an open vessel without agitation, at 18°C and atmospheric pressure, especially enhanced through iron compounds, presumably enables the liberation of protons in the water. This allowed the observation of different readings of electrical currents and voltages, as the residence time of the mixture in the vessel progressed. At the conclusion of the experiment a current of 22 mA, an 1 V was obtained using copper and zinc electrodes having a surface of 1 cm².

38.The pH value of juice obtained from squeezing any part of the banana plant is similar to the value measured when assaying the juices of other fruits and vegetables, which is 4.5. Nevertheless, if the juice obtained from squeezing any part of the banana plant is oxidized using hydrogen peroxide (approx. one drop per 20 cc of juice), the value registered in a digital multimeter, due to the liberation of protons, is 15 mA, approximately, and decreases with time.

39.When contacting juice obtained from squeezing any part of the banana plant with linear solvents such as kerosene, or gasoline, two phases can be observed: wáter and oil. When juice obtained from squeezing any part of the banana plant is brought in contact with No. 6 Fuel Oil (bunker), or with diesel, at ambient temperature and pressure, in the presence of metals, the apparent viscosity of the mixture changes, and -if the contact time is prolonged- clusters that progressively solidify are formed.

40.If light o heavy crude oils are mixed with oxidized juice obtained from squeezing any part of the banana plant, or if crude oil is placed in juice obtained from squeezing any part of the banana plant, and if hydrogen peroxide is added, a mixture of lower viscosity than the original mixture is obtained. After this effect takes place decomposition to carbon and other compounds is observed due to the reversibility of the reaction, enhanced by the presence of vanadium, nickel or iron. Addition of these metals is not necessary in the case of Ecuadorian crude oils, because it already contains the above-mentioned metals.

41.The search of a way to conserve the observed oil improvement directed the inventor of this patent to study the reaction described in the previous paragraph when carried out at atmospheric temperature and pressure. At these conditions, and considering that juice obtained from squeezing any part of the banana plant can dissolve metallic compounds, different formulations of these compounds were added to juice obtained from squeezing any part of the banana plant, although some of them are still being researched. For example, to dissolve 1 gr of titanium oxide in 40 cc juice obtained from squeezing any part of the banana plant., 20 cc of a neutral soap (Tween 80), 20 cc of 50° Gay Lussac Ethanol, and one gr glucose were needed to achieve dissolution in 24 hours time. It is hypothesized that the dissolution of the titanium oxide is achieved through the formation of a chelate, which is the mechanism that is thought to take place in the improvement of crude oils claimed in this patent.

42.Other metallic compounds that were researched were sodium orthovanadate, and platinum chloride. Upon addition of the latter compound, chlorine gas was evolved, and a limpid solution remained.

43.Although tests were run with mixtures of crude oil and juice obtained from squeezing any part of the banana plant.; with crude oil and dopamine; and with crude oils and other compounds, at different temperatures, up to 60°C, the experiments carried out at ambient temperature, or around 35°C, were the most successful of the lot.

44.The ease of this reaction hinges upon the fact that when the viscosity of heavy oil is lowered, rapid mixture of the crude oil with other substances is enhanced. Additionally, the activation constants of the reactions change, thus accelerating the generation of products. Unfortunately, the oxidation reactions also change their velocities, thus making it difficult to quench the deterioration of the raw material as a whole.

45. Upon studying the quenching of these reactions to hinder reversibility, it was found that increasing the temperature deactivation of the metallic catalysts that were formed was possible, because they probably were present in the form of chelates. The quenching temperature was found to be around 70°C; and the reaction time is linked to the reaction volume.

46.This technique, although simple at laboratory level, due to the uncomplicated heat transfer at this scale, would be complex, and is not completely defined at larger scales, due to the formation of unidentified gases that change the value of the heat transfer coefficients of the mixtures.

47.The solids content of the juice obtained from squeezing any part of the banana plant increases through evaporation of water carried out under partial vacuum, thus obtaining a semisolid product, of different consistencies. Although dry product is difficult to add to crude oil, and semisolid product is easier to add to crude oil, both of them are more efficient that untreated juice obtained from squeezing any part of the banana plant in decreasing or augmenting crude oil viscosity. Semisolid product is, on the other hand, very good for the containment of crude oil spills, especially if it has been previously treated with hydrogen peroxide.

48.At the present time, studies are being carried out in the context of this patent, geared to trapping dopamine on different solid matrices, to allow for the reuse of the catalyst.

49. During the course of tests with soy and palm oil, and other fatty acids, as well as with ketones, changes in their physical, chemical, and electrical properties have been noticed.

### Examples

### Example 1

50.Procedure to prove that electrical energy is generated in a fluid containing, among others, banana juice obtained from any part of the banana plant.
a) Place 100 ml of juice obtained from any part of the banana plant in a beaker
b) Place 0.5 cc of hydrogen peroxide in a small container
c) Mix fluids describes in (a) and (b), and stir for 30 seconds
d) In the mixture obtained in step (c) submerge one zinc electrode, and one copper electrode, both having 1 cm² area, placing them 1 mm apart
e) Measure the current and voltage produced with a digital multimeter, to check that the values obtained should be in the vicinity of 15 mA, and 1 V, d.c.

51.Different values of current and voltage can be obtained upon varying the separation between the electrodes in the abovementioned experiment.

### Example 2

52.Procedure to prove that electrical energy is generated in a fluid containing, among others, banana juice obtained from any part of the banana plant.
a) Place 100 ml of banana juice obtained from the stem of the plant in a beaker
b) Weigh 20 mg of Al₂O₃ in an analytical balance
c) Weigh 5 mg of aluminum and lithium hydride (Li Al H₄) on an analytical scale
d) Mix (a), and (b), upon stirring, for 1 minute
e) Mix (d) and (c). Stir for one minute
f) In the mixture obtained in step (e) submerge one zinc electrode, and one copper electrode, both having 1 cm² area, placing them 1 mm apart
g) Measure the current and voltage produced with a digital multimeter, to check that the values obtained should be in the vicinity of 8 mA, and 0.6 V, d.c.

53. Different values of current and voltage can be obtained upon varying the separation between the electrodes in the abovementioned experiment.

### Example 3

54.This example provides detailed information about the laboratory scale procedure used to change the physical and chemical characteristics of a 16° API crude oil. It purports to provide an idea about the manner through which this invention allow the partial resolution of the contamination of water produced by an oil spill. Slight adjustments of the procedure should be implemented according to the API degree of the spilled oil.

55. Before carrying out the experiment mixture A, which shall be called "viscosity increaser", in the manner described below.
a) Measure 84.5 cc of banana juice obtained from any part of banana plant, and place in a beaker
b) Measure 25 cc of ethyl alcohol, and place in a beaker
c) Measure 0.5 cc of hydrogen peroxide
d) Mix (a) and (b), and stir for 30 seconds
e) Add (c) and (d) and stir for 30 seconds
f) Add 0.1 g of iron oxide (Fe₂O₃) to the mixture obtained in (e), and stri for 1 minute

56.To continue the experiment a deep glass tray should be used, appropriate to appreciate comparatively, the thicknesses of the water and crude oil layers, as well as the eventual presence of decanted solids.
a) Place water on the glass tray up to 10 cm height
b) Place crude oil upon the water, to obtain a layer of approximately 2 or 3 mm thickness
c) Add the "viscosity increaser" mixture to the tray in a quantity approximately equal to 10% of the crude oil present, distributing it evenly with the help of a spatula.
d) Allow the fluids in the glass tray to rest for about eight hours, or mechanically agitate to shorten the time to about four hours.
e) Once reaction has taken place as per the explanation in (d), a sludgy supernatant suspension can be noticed on the water surface, which can be withdrawn by physical means, without breaking, as it does not mix with the water.

57.When experiments are conducted at pilot scale with the "viscosity increaser", with larger volumes water and spilled crude oil, changes in the physical properties of the crude oil can be noticed with the naked eye, after the prescribed time, without regards to the API of the oil, or even to the fact that the oil may have been "aged" through prolonged contact with air.

58.In case of a spill on the ground, cleansing the soil is very difficult and complicated, if not impossible, on the short and medium terms. To solve this problem, modern technology offers many different alternatives, some of them involving degradation of the crude oil. The most accepted techniques are, nevertheless, the ones that subject the contaminated soil to the action of microorganisms specialized in the decomposition of the contaminants, Although acceptable, these techniques are very slow, and effective.

59.Through use of the "viscosity increaser" developed under this patent, the abovementioned techniques, and others that generally require accelerated degradation of crude oil, can be rendered successful because the "viscosity increaser" acts as a provider of a carbon-rich substrate that can be readily metabolized by the microorganisms.

### Example 4

60.Two features of the present invention are illustrated in the present example: Firstly, the procedure used to alter the physical and chemical characteristics of a 16° API crude oil; and, secondly, the dissolution of sodium orthovanadate in water.

61.Before carrying out the procedure mixture B has to be prepared which shall be called the "viscosity reducer mixture", in the following manner:
a) Measure 40 cc of banana juice taken from the stem of the plant.
b) Measure 20 cc of Tween 80
c) Measure 20 cc Ethyl Alcohol of 50° Gay Lousac
d) Weigh 1 g titanium oxide
e) Weigh 1 gr glucose, industrial grade, on a precision balance
f) Weigh 1 g sodium orthovanadate, on a precision balance
g) Mix (b) and (c). Agitate for 2-3 minutes until mixture is homogenous
h) Mix (a) and (g). Agitate the mixture for 2 minutes, until uniform aspect is achieved
i) Mix (h), (d), and (f). Agitate strongly for 3 minutes
j) Let the mixture obtained in (i) rest at ambient temperature for 24 hours in an open vessel. After the above-mentioned interval it shall be noticeable that the insoluble compounds used during this procedure shall have been dissolved.

62.The volume of "viscosity reducer mixture" required to treat a given volume of an oil of different API grade than the one mentioned above has to be established through trial and error. To be successful, and increment of about five units with respect to the original API grade should be obtained.

63. The procedure for a typical oil improvement run is described below:
a) Measure 100 cc of crude oil
b) Determine the API grde
c) Add 30 cc of "viscosity reducer mixture" to the crude oil
d) Stir vigorously
e) Add 10 cc distilled water
f) Measure the final API grade

### References:

■ Kanasawa, K. y Sakakibara, H., " High content of dopamine a strong antioxidant in Cavendish banana", J.Agric.Food Chem. 2000. Mar; 48(3):844-8
■ Sojo, M.M.; Núñez Delicado, E.; García-Carmona, F.; Sánchez-Ferrer, A., "Cyclodextrins as activator and inhibitor of latent banana pulp polyphenol", J.Agric.Food Chem. 1999. Feb; 47(2): 518-23
■ Sojo, M.M.; Núñez-Delicado, E.; Sánchez-Ferrer, A.; García-Carmona, F., "Oxidation of salsolinol by banana pulp polyphenol oxidase and its kinetic synergism with dopamine", J.Agric.Food Chem. 2000. Nov; 48(11):5543-7
■ Kursanov, D.N., Parnes,Z.N., Kalinkin,M.I., y Lim,N.M., " Ionic Hydrogenation and Related Reactions", A.N. Nesmeyanov Institute of Organo-Element Compounds, USSR Academy of Sciences, Moscow., Soviet Scientific reviews Supplement Series, 1985. Harwood Academic Publishers. Poststrasse 22, 7000 Chur, Switzerland.
■ Wen, Michael Y; Nelson, Eric D. Heavy Oil upgrade method and apparatus. US patent N° 6852215.
■ Venkatesan,V.N. Viscous oil recovery method. US patent N° 4722395.
■ Huybrechts, Diana R. Oxidation of saturated hydrocarbon chains. US patent N° 5021607.
■ Stowe, Lawrence R. Method of conversion of heavy hydrocarbon feedstocks. US patent N° 5547563.
■ Nemeth, Laszlo T.;Bricker, Jeffrey C.;Rabo, Jules; Gillespie,R. Direct carbonylation of paraffins using solid strong acid catalyst. US patent N° 6359179

## Claims

1. A process to convert heavy oil it into lighter oil. The process consists of:
Addition of a dopamamine solution or dopamine compounds to the oil, in a proper volume, or weight ratio, to be established by trial and error, according to the crude characteristics.
Acidification of the mixture up to a pH values ranging between 4 and 5.
Allow the mixture to react in the presence divalent ions such as magnesium or calcium.
Stop the reaction by rising the temperature up to 70 °C, as needed to achieve a given viscosity.
The crude oil must have a vanadium content of up to 400 ppm, and a nickel content of up to 100 ppm.

2. The process of claim 1, wherein the dopamine content must be between 0 and 100 mg per cubic centimetre.

3. A process to convert heavy oil it into lighter oil, which consists of:
Addition to crude oil, in the appropriate volume or weight ratio, established by trial and error in accordance with its characteristics, of a partially or totally oxidised juice obtained from squeezing any part of the banana plant.
Addition of a solution of neutral soap and titanium, or titanium's compounds, to the mixture, and
Let the mixture react.
Stop the reaction by rising the temperature up to 70 °C, as needed to achieve a given viscosity.
The crude oil must have a vanadium content of up to 400 ppm, and a nickel content of up to 100 ppm.

4. A process of claim 3, wherein said dopamine is the dopamine naturally present in the juice obtained from squeezing any part of the banana plant, according to its vegetal variety.

5. The process of claim 3, wherein instead of adding the juice obtained from squeezing any part of the banana plant, dopamine or its compounds are added.

6. The process of claim 3, wherein instead of adding the juice obtained from squeezing any part of the banana plant, a banana squeeze modified by any physical or chemical means is added to the crude oil.

7. The process to extract oil of any API degree from an oil spill onto water, comprising three steps, as follows:
Add and distribute uniformly onto the spill, a mixture comprising of the juice obtained from squeezing any part of the banana plant, partially or totally oxidised, oxygen peroxide, and ethyl alcohol in a maximum 30% w/w concentration, and traces of metals like iron, vanadium or nickel, as catalysts.
Allow the obtained mixture to stand at ambient conditions not less than twelve hours.
Withdraw the oil slurry so obtained from the water surface.

8. The process of claim 7, wherein dopamine or dopamine's compounds, are added instead of the juice obtained from squeezing any part of the banana plant.

9. The process of claim 7, wherein instead of a mixture comprising of the juice obtained from squeezing any part of the banana plant, a banana squeeze modified by any physical or chemical means is added to the crude oil.

10. A process to accelerate the decomposition of any crude oil, of any API degree, under environmental conditions, spilled over soil. Aforementioned process comprising of the two following steps:
Add and mix homogeneously with the soil a mixture comprised of the juice obtained from squeezing any part of the banana plant, partially or totally oxidized, hydrogen peroxide, and, as catalyst, trace of metal such as iron, vanadium, or nickel.
Allow the action of the weather onto the soil for a period of no less than three months, during which period the decomposition of the crude oil is effected. The decomposition period can be diminished by physical or chemical means by acceleration of the oxidation speed.
Obtain of innocuous and biodegradable compounds such as carbon dioxide, water, and some carbon compounds; and other chemicals, including -but not limited to- aldehydes, ketones, quinones and carboxylic acids.

11. The process of claim 10, wherein dopamine or dopamine's compounds are mixed and added instead of the juice obtained from squeezing any part of the banana plant.

12. The mixtures of claims 1, 2, 3, 4, 5, 6, 7, 8, 10, and 11 between fluids, fluids and solid, or among solids.

13. The mixtures containing the juice obtained from squeezing any part of the banana plant, partially or totally oxidized, or dopamine. Abovementioned oxidation may be accomplished by any method, or any conversion degree, especially if these oxidations were accomplished by addition of oxygen peroxide (H₂O₂), air or oxygen gas bubbling.

14. The mixtures of claim 12, to which compounds of silicon, magnesium, boron, or fluorine, have been added, alone or combined, in any proportion, to achieve mobility of hydronium ions.

15. The mixtures of claim 12 to which compounds of Li, Zn and Sₙ, or compounds of any other metal have been added, to cause hydronium ion transfer.

16. The mixtures of claims12, to which crude oil or any products of crude oil fractionation have been added, either by themselves or combined.

17. The mixtures of claim 12, to which vegetal oil and linear and / or branched alcohols have been added.

18. Mixtures containing dopamine and its compounds, either separated or combined, in solid or fluid phase, to which silicon, magnesium, boron, or fluoride compounds have been added, either combined or by themselves, in any proportion, to cause hydronium ion mobility.

19. Mixtures containing dopamine and its compounds, either separated or combined, in solid or fluid phase, to which Li, Zₙ, and Sₙ compounds have been added, either combined or by themselves, in any proportion, to cause hydronium ion transfer.

20. The mixtures containing dopamine and its compounds, to which crude oil or any products of crude oil fractionation have been added

21. The mixtures containing dopamine and its compounds either separated or combined, in fluid or solid phase, to which metals, carbonated or nitrogen compounds, and air or gases such as oxygen and nitrogen have been added.

22. The mixtures containing dopamine and its compounds mixtures comprising separate mixing or combination of dopamine or dopamine compounds, remaining into fluid phase or solid phase, to which been added metals, carbon compounds or nitrogen compounds and air or gases like oxygen and hydrogen.

23. The processes and mixtures, as described in claims 1, 2, 3, 4, 5, 6, 7, 8, 9, 10, 11, 12, 13, 14, 15, 16, 17, 18, 19, 20, 21, 22 and 23, in which mixtures of juice obtained from squeezing any part of the banana plant, dopamine mixtures and dopamine compounds have been formed, in different proportions.

24. The processes and mixtures as described in claim 23, in which different conditions of temperature and pressure prevail, in any arrangement and combinations.
